# EUROPÄISCHE PATENTSCHRIFT

(11) **EP 3 124 290 B1**
(45) Veröffentlichungstag und Bekanntmachung des Hinweises auf die Patenterteilung: **16.05.2018**
(21) Anmeldenummer: 16158856.1
(22) Anmeldetag: 07.03.2016
(51) Int. Cl.: B60C 11/03, B60C 11/13

(54) **FAHRZEUGLUFTREIFEN**
PNEUMATIC TYRES FOR A VEHICLE
PNEUMATIQUES DE VÉHICULE

(30) Priorität: 30.07.2015 DE 102015214483
(43) Veröffentlichungstag der Anmeldung: 01.02.2017
(73) Patentinhaber: Continental Reifen Deutschland GmbH, 30165 Hannover (DE)
(72) Erfinder: Özüduru, Ahmet, 30419 Hannover (DE); Kuniak, Lubos, 01863 Ladce (SK); Fischer, Markus, 30823 Garbsen (DE)
(74) Vertreter: Finger, Karsten

(56) Entgegenhaltungen:
- EP-A1- 1 974 957
- EP-A1- 2 289 714
- EP-A1- 2 631 087
- EP-A1- 2 759 417
- EP-A1- 2 803 502
- EP-A2- 2 465 706
- JP-A- 2014 184 948
- KR-A- 20140 020 771
- US-A1- 2012 222 788

## Beschreibung

Die Erfindung betrifft einen Fahrzeugluftreifen in Radialbauart mit einem Laufstreifen mit einer durch eine Umfangsrille laufstreifeninnenseitig begrenzten schulterseitigen Profilblockreihe, welche bis zu 30% der Breite der Bodenaufstandsfläche des Laufstreifens einnimmt und mit in die Umfangsrille einmündenden, zumindest im Wesentlichen parallel zueinander verlaufenden Querrillen versehen ist, wobei jede Querrille durch einen Rillengrund und zwei Rillenflanken begrenzt ist, und wobei jede Querrille innerhalb der Bodenaufstandsfläche mindestens zwei aneinander anschließende Rillenabschnitte unterschiedlicher Tiefe aufweist, wobei die Tiefe der Rillenabschnitte stufenweise Richtung Laufstreifenrand zunimmt.

Ein Fahrzeugluftreifen der eingangs genannten Art ist aus der EP 1 974 957 A1 bekannt. Der Laufstreifen dieses Fahrzeugluftreifens weist schulterseitig eine Profilblockreihe auf, deren Profilblöcke durch Querrillen voneinander getrennt sind, wobei am Rillengrund der Querrillen jeweils ein Steg ausgebildet ist, welcher stufenförmig ausgeführt ist. Die Höhe der Stufen wird geringer je näher sie beim Laufstreifenrand liegen. Durch diese Maßnahme soll das Griffverhalten des Fahrzeugluftreifens auf matschigem, schlammigem oder schneebedecktem Untergrund verbessert werden. Bei dem aus der EP 2 759 417 A1 bekannten Fahrzeugluftreifen sind ebenfalls durch Querrillen voneinander getrennte Schulterblöcke bekannt, wobei jede Querrille innerhalb der Bodenaufstandsfläche zwei aneinander anschließende Rillenabschnitte unterschiedlicher Tiefe aufweist. Der näher beim Laufstreifenrand befindliche Rillenabschnitt weist die größere Tiefe auf.

Bei Fahrzeugluftreifen mit den in üblicher Weise profilierten Laufstreifen wird beim Abrollen am Untergrund durch die radiale Kompression der Profilpositive, beispielsweise der Profilblöcke, der Negativanteil verringert. Dabei wird in Laufstreifen mit Querrillen in den schulterseitigen Bereichen durch diese Querrillen hindurch Luft aus der Bodenaufstandsfläche gepresst. Dieser Effekt ist als "Air-Pumping-Effekt" bekannt und bewirkt eine zum Abrollgeräusch zusätzliche Geräuschemission. Der Air-Pumping-Effekt ist umso stärker ausgeprägt, je weniger rau und je weniger porös die Straßenoberfläche ist. Die Fahrgeschwindigkeit und die Menge der durch die Querrillen strömenden Luft bestimmen die Lautstärke, die Ausgestaltung der Querrillen bestimmt den Frequenzbereich.

Das Ausmaß des Air-Pumping-Effektes wird insbesondere durch die Anzahl der schulterseitig im Laufstreifen vorgesehenen Querrillen sowie durch die Größe der Querschnittsfläche der Querrillen beeinflusst. Die Geräuschabstrahlung lässt sich durch eine Verengung der Rillenquerschnittsfläche oder durch einen Verzicht auf Querrillen verringern bzw. vermeiden. Diese Maßnahmen gehen jedoch mit einer Verschlechterung der Wasserableiteigenschaften einher, sodass die Aquaplaningeigenschaften sowie das Nassbremsverhalten des Fahrzeugluftreifens leiden.

Der Erfindung liegt daher die Aufgabe zugrunde, die durch Air-Pumping verursachte Geräuschemission beim Fahren zu verringern, wobei gute Aquaplaningeigenschaften erhalten bleiben sollen.

Die gestellte Aufgabe wird erfindungsgemäß dadurch gelöst, dass bei aneinander anschließenden Rillenabschnitten jeweils am Rillengrund des tieferen Rillenabschnittes bei einer Flanke zum anschließenden seichteren Rillenabschnitt lokal eine nutartige, in Umfangsrichtung verlaufende Vertiefung ausgebildet ist.

Mit der sich stufenweise verändernden Tiefe ändert sich auch die Querschnittsfläche der Querrillen, sodass die die Querrillen durchströmende Luft abgelenkt und verwirbelt wird und eine turbulente Luftströmung entsteht, welche das Auftreten von "Air-Pumping" wirkungsvoll unterdrückt. Dank der zur Laufstreifenaußenseite abnehmenden Tiefe bleiben auch die guten Wasserableiteigenschaften der Querrillen erhalten. Die Vertiefungen sind zusätzliche lokale Bereiche innerhalb der Querrillen mit Querschnittsänderung und unterstützen daher wirkungsvoll ein Unterdrücken von "Air-Pumping".

Um den "Air-Pumping"-Effekt besonders wirkungsvoll zu unterdrücken, ist es ausreichend, wenn die nutartigen Vertiefungen am Niveau des jeweiligen Rillengrundes eine Breite von 1,5 mm bis 2,5 mm und gegenüber dem Niveau des Rillengrundes in radialer Richtung eine Tiefe von 0,3 mm bis 0,7 mm, vorzugsweise von 0,5 mm, aufweisen.

Für gute Wasserableiteigenschaften der Querrillen ist es vorteilhaft, wenn im Bereich der nutartigen Vertiefungen jeweils die Flanke zum anschließenden seichteren Rillenabschnitt auch die nutartige Vertiefung begrenzt und vorzugsweise unter einem Winkel von 8° bis 12°, insbesondere von 10°, zur radialen Richtung verläuft. Die zweite, jede nutartige Vertiefung begrenzende Flanke sollte unter einem Winkel von 35° bis 45°, insbesondere von etwa 40°, verlaufen.

Besonders vorteilhaft ist es ferner, wenn die Tiefe des seichtesten Rillenabschnittes 3,0 mm bis 4,0 mm, insbesondere 3,5 mm, die Differenz zwischen den unterschiedlichen Tiefen in den Rillenabschnitten 0,25 mm bis 1,25 mm beträgt.

Besonders bevorzugt ist ferner eine Ausführung der Erfindung, bei der die Querrillen jeweils drei Rillenabschnitte unterschiedlicher Tiefen aufweisen, wobei die Differenz der Tiefen des tiefsten Rillenabschnittes und des mittleren Rillenabschnittes 0,15 mm bis 0,35 mm, insbesondere 0,25 mm, und die Differenz der Tiefen des mittleren Rillenabschnittes und des seichtesten Rillenabschnittes 0,75 mm bis 1,25 mm, insbesondere 1,0 mm, beträgt.

Besonders bevorzugt ist ferner eine Ausführung, bei der die Rillenabschnitte in Erstreckungsrichtung der Querrille im Wesentlichen gleich lang sind, wobei die Rillenabschnitte gemeinsam vorzugsweise über zumindest 80 % der Breite der schulterseitigen Profilblockreihe verlaufen.

Für das Wasserableitvermögen des Laufstreifens insgesamt ist es ferner vorteilhaft, wenn die Querrillen jeweils über einen Mündungsabschnitt in die die schulterseitige Profilblockreihe begrenzende Umfangsrille einmünden, welcher eine größere Tiefe aufweist als der tiefste Rillenabschnitt. In diesem Zusammenhang ist es ferner günstig, wenn der seichteste Rillenabschnitt der Querrille an der Laufstreifenoberfläche eine geringere Breite aufweist als die in Richtung Laufstreifenrand anschließenden Rillenabschnitte.

Weitere Merkmale, Vorteile und Einzelheiten der Erfindung werden nun anhand der Zeichnung, die schematisch ein Ausführungsbeispiel der Erfindung darstellt, näher beschrieben. Dabei zeigen
Fig. 1 eine Draufsicht auf einen Ausschnitt eines Laufstreifens eines Fahrzeugluftreifens mit einer Ausführungsvariante gemäß der Erfindung und
Fig. 2 bis Fig. 5 Schnittdarstellungen entlang der Linien II-II bis V-V der Fig. 1.

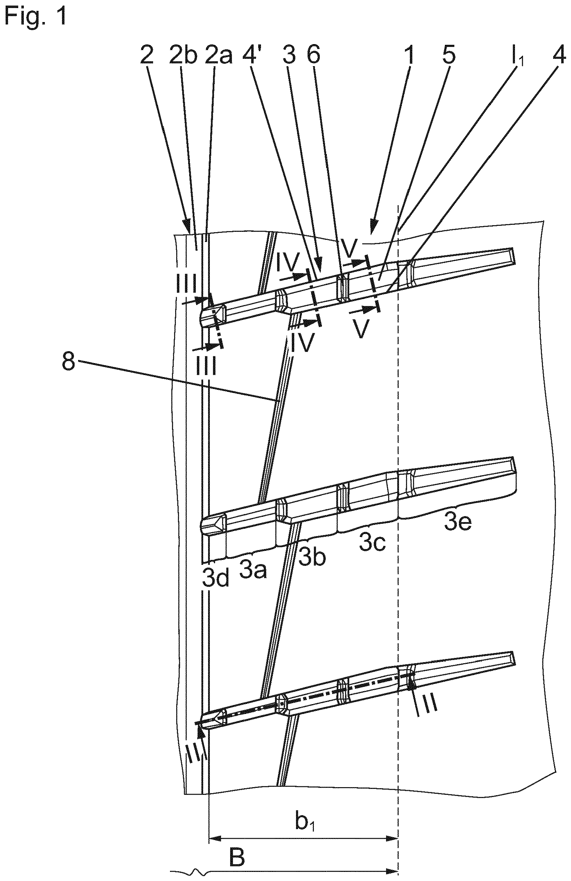

In Fig. 1 sind von einem Laufstreifen eines Fahrzeugluftreifens in Radialbauart, insbesondere eines Van-Reifens, eine schulterseitige Profilblockreihe 1 und eine die Profilblockreihe 1 laufstreifeninnenseitig begrenzende Umfangsrille 2, von welcher nur ein Teilbereich gezeigt ist, dargestellt. Der an die Umfangsrille 2 anschließende, in Fig. 1 nicht gezeigte Bereich des Laufstreifens ist nicht Gegenstand der Erfindung und kann in an sich bekannter Weise gestaltet sein. Im zweiten schulterseitigen Bereich des Laufstreifens kann eine zu Fig. 1 analoge Ausgestaltung vorgesehen sein.

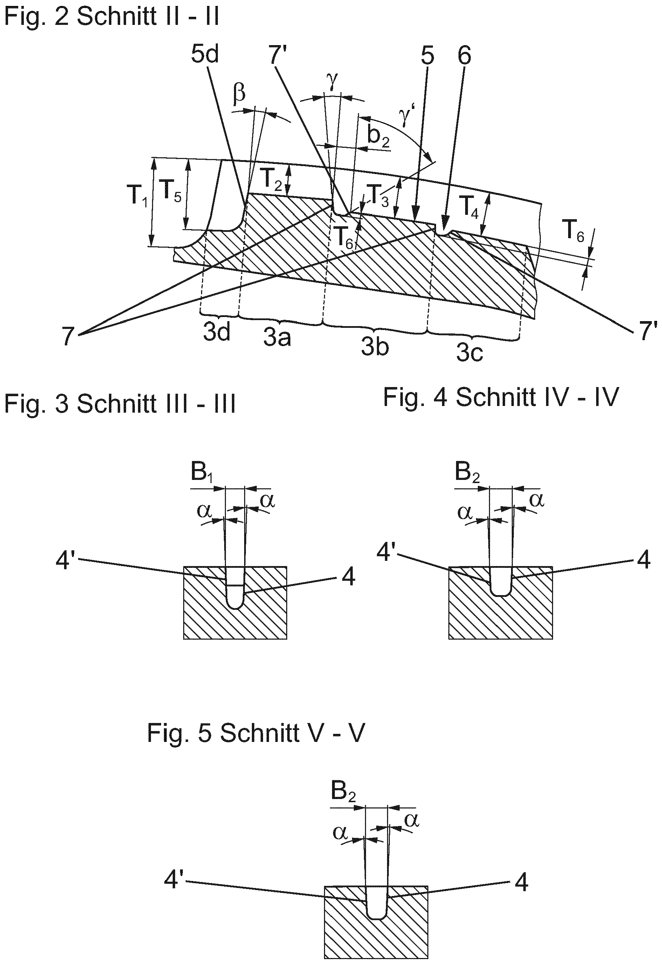

Die bei der gezeigten Ausführungsvariante in Umfangsrichtung im Wesentlichen gerade verlaufende Umfangsrille 2 ist durch zwei im Wesentlichen in radialer Richtung verlaufende Rillenflanken 2a, von welcher in Fig. 1 nur eine zu sehen ist, und einen Rillengrund 2b begrenzt. Gemäß Fig. 2 weist die Umfangsrille 2 in radialer Richtung eine Tiefe T₁ von insbesondere 6,5 mm bis 11,0 mm auf, wobei die Tiefe T₁ der für den jeweiligen Fahrzeugluftreifen vorgesehenen maximalen Profiltiefe entspricht.

In Fig. 1 ist der laufstreifenaußenseitige Rand des Laufstreifens, welcher dem laufstreifenaußenseitigen Rand der Bodenaufstandsfläche des Laufstreifens entspricht, durch eine in Umfangsrichtung verlaufende Linie l₁ gekennzeichnet. Innerhalb der Bodenaufstandsfläche weist die schulterseitige Profilblockreihe 1 in axialer Richtung eine Breite b₁ von 15% bis 30%, insbesondere von etwa 25%, der Breite B der Bodenaufstandsfläche auf, wobei die Breite B dem statisch ermittelten Footprint gemäß E.T.R.T.O.-Standards (Last bei 70% der Tragfähigkeit bei einem Innendruck von 2,5 bar, Innendruck 85% von 2,5 bar) entspricht.

Die schulterseitige Profilblockreihe 1 ist mit einer Vielzahl von in die Umfangsrille 2 einmündenden Querrillen 3 versehen, welche sich zumindest im Wesentlichen parallel zueinander erstrecken sowie jeweils unter einem Winkel von bis zu 30°, insbesondere von bis zu 10°, zur axialen Richtung verlaufen. In Umfangsrichtung benachbarte Querrillen 3 weisen die üblichen Abstände von vorzugsweise 20,0 mm bis 50,0 mm voneinander auf. Jede Querrille 3 ist durch zwei Rillenflanken 4, 4' und einen besonders gestalteten Rillengrund 5 begrenzt, welcher der Querrille 3 innerhalb der Bodenaufstandsfläche einen speziellen Tiefenverlauf verleiht.

Jede Querrille 3 weist innerhalb der Bodenaufstandsfläche einen laufstreifeninnenseitigen Rillenabschnitt 3a, einen mittleren Rillenabschnitt 3b und einen laufstreifenaußenseitigen Rillenabschnitt 3c auf, wobei die Rillenabschnitte 3a, 3b , 3c aneinander anschließen. Die Rillenabschnitte 3a, 3b, 3c sind in Erstreckungsrichtung der Querrille 3 im Wesentlichen gleich lang und verlaufen über zumindest 80% der Breite b₁.

Bei der in Fig. 1 gezeigten Ausführungsvariante mündet die Querrille 3 über einen kurzen Mündungsabschnitt 3d in der Umfangsrille 2. Ferner weist die Querrille 3 einen an den laufstreifenaußenseitigen Rillenabschnitt 3c anschließenden, zumindest im Wesentlichen außerhalb der Bodenaufstandsfläche verlaufenden Rillenendabschnitt 3e auf, welcher schulterseitig in an sich bekannter Weise mit abnehmender Breite und Tiefe ausläuft. Des Weiteren ist bei der in Fig. 1 gezeigten Ausführungsvariante an den laufstreifeninnseitigen Endbereichen der Rillenabschnitte 3b und 3c jeweils eine lokale nutartige Vertiefung 6 ausgebildet.

Fig. 3 bis Fig. 5 zeigen Querschnitte durch die drei Rillenabschnitte 3a, 3b, 3c. Wie diese Figuren zeigen, verlaufen die Rillenflanken 4, 4' in jedem der drei Rillenabschnitte 3a, 3b, 3c jeweils unter einem Winkel α zur radialen Richtung, welcher bis zu 10°, vorzugsweise bis zu 5°, und beim gezeigten Ausführungsbeispiel 2° beträgt.

Der laufstreifeninnenseitige Rillenabschnitt 3a weist an der Laufstreifenoberfläche eine Breite B₁ (Fig. 3) von 2,0 mm bis 4,0 mm auf. Der mittlere Rillenabschnitt 3b weist an seinem laufstreifeninnseitigen Ende einen Knick auf, sodass der mittlere Rillenabschnitt 3b und der laufstreifenaußenseitige Rillenabschnitt 3c eine Breite B₂ > B₁ (Fig. 4 und Fig. 5) von 3,0 mm bis 6,0 mm aufweisen.

Gemäß Fig. 2, welche einen mittigen Längsschnitt durch die Querrille 3 innerhalb der Bodenaufstandsfläche zeigt, weisen die Rillenabschnitte 3a, 3b, 3c in radialer Richtung unterschiedliche Tiefen T₂, T₃, T₄ auf, wobei die Tiefe T₂, T₃, T₄ jedes Rillenabschnittes 3a, 3b, 3c - abgesehen von den Bereichen mit lokalen Vertiefungen 6 - zumindest im Wesentlichen konstant ist. Die Tiefe T₂ des laufstreifeninnseitigen Rillenabschnittes 3a beträgt 3,0 mm bis 4,0 mm, insbesondere 3,5 mm. Die Tiefe T₃ des mittleren Rillenabschnittes 3b ist um 0,75 mm bis 1,25 mm, insbesondere um 1,0 mm, größer als die Tiefe T₂. Die Tiefe T₄ des laufstreifenaußenseitigen Rillenabschnittes 3c ist um 0,15 mm bis 0,35 mm, insbesondere um 0,25 mm, größer ist als die Tiefe T₃.

Der Mündungsabschnitt 3d erstreckt sich maximal über 15% der Erstreckungslänge der Querrille 3 in der Bodenaufstandsfläche und weist an der Laufstreifenoberfläche die Breite B₁ des laufstreifeninnseitigen Rillenabschnittes 3a auf (Fig. 1 und Fig. 3). Der Rillengrund 5 des Mündungsabschnittes 3d befindet sich in radialer Richtung in einer Tiefe T₅ von 5,0 mm bis 7,6 mm. Der Mündungsabschnitt 3d weist zum laufstreifeninnseitigen Rillenabschnitt 3a eine Flanke 5d auf, welche unter einem Winkel β von bis zu 12°, insbesondere von 10°, zur radialen Richtung verläuft.

Die bereits erwähnten nutartigen Vertiefungen 6 sind am Rillengrund 5 der Rillenabschnitte 3b, 3c ausgebildet und erstrecken sich in Umfangsrichtung. Die in axialer Richtung am Niveau des Rillengrundes 5 vorliegende Breite b₂ der Vertiefung 6 beträgt 1,5 mm bis 2,5 mm, ihre Tiefe T₆ gegenüber dem Niveau des Rillengrundes 5 beträgt 0,3 mm bis 0,7 mm, vorzugsweise 0,5 mm. Jede Vertiefung 6 ist durch zwei Flanken 7, 7' begrenzt, wobei die weiter laufstreifeninnseitig befindliche Flanke 7 bis zu dem laufstreifeninnseitig an die jeweilige Vertiefung 6 anschließenden Rillenabschnitt 3a bzw. 3b und unter einem Winkel γ zur radialen Richtung verläuft, welcher 8° bis 12°, insbesondere 10°, beträgt. Die zweite Flanke 7' verläuft zum Rillengrund 5 des Rillenabschnittes 3b bzw. 3c unter einem Winkel y' zur radialen Richtung, welcher 35° bis 45°, insbesondere 40°, beträgt.

Wie die Querschnittsdarstellungen in Fig. 3 bis Fig. 5 zeigen, sind die Übergänge zwischen den Rillenflanken 4, 4' und dem Rillengrund 5 in den Rillenabschnitten 3a bis 3c in bekannter Weise gerundet.

Wie Fig. 1 zeigt, kann jeweils zwischen zwei in Umfangsrichtung benachbarten Querrillen 3 eine seichte Nut 8 verlaufen. Jede Nut 8 erstreckt sich vorzugsweise zwischen dem laufstreifeninnseitigen Rillenabschnitt 3a der einen Querrille 3 und dem mittleren Rillenabschnitt 3b der benachbarten Querrille 3 sowie unter einem Winkel von vorzugsweise bis zu 20° zur Umfangsrichtung. Jede Nut 8 weist in radialer Richtung eine Tiefe von vorzugsweise 1,0 mm und an der Laufstreifenoberfläche eine Breite von vorzugsweise 1,5 mm auf.

In einer einfacheren Ausgestaltung der Erfindung weisen die Querrillen 3 ausschließlich zwei der drei Rillenabschnitte 3a, 3b, 3c auf, wobei die vorgesehenen Rillenabschnitte direkt aneinander anschließen und die Querrille 3 auch mit dem einen Rillenabschnitt 3a, 3b in die Umfangsrille 2 münden kann.

### Bezugsziffernliste

- 1: Profilblockreihe
- 2: Umfangsrille
- 2a: Rillenflanke
- 2b: Rillengrund
- 3: Querrille
- 3a, 3b, 3c: Rillenabschnitt
- 3d: Mündungsabschnitt
- 3e: Rillenendabschnitt
- 4, 4': Rillenflanke
- 5: Rillengrund
- 6: nutartige Vertiefung
- 7,7': Flanke
- 8: Nut
- T_{i,i= 1 bis 6}: Tiefe
- B, B₁, B₂, b₁: Breite
- α, β, β', γ, γ': Winkel
- l₁: Linie

## Patentansprüche

1. Fahrzeugluftreifen in Radialbauart mit einem Laufstreifen mit einer durch eine Umfangsrille (2) laufstreifeninnenseitig begrenzten schulterseitigen Profilblockreihe (1), welche bis zu 30% der Breite (B) der Bodenaufstandsfläche des Laufstreifens einnimmt und mit in die Umfangsrille (2) einmündenden, zumindest im Wesentlichen parallel zueinander verlaufenden Querrillen (3) versehen ist, wobei jede Querrille (3) durch einen Rillengrund (5) und zwei Rillenflanken (4, 4') begrenzt ist, wobei jede Querrille (3) innerhalb der Bodenaufstandsfläche mindestens zwei aneinander anschließende Rillenabschnitte (3a, 3b, 3c) unterschiedlicher Tiefe (T₂, T₃, T₄) aufweist, wobei die Tiefe (T₂, T₃, T₄) der Rillenabschnitte (3a, 3b, 3c) stufenweise Richtung Laufstreifenrand zunimmt,
**dadurch gekennzeichnet,**
**dass** bei aneinander anschließenden Rillenabschnitten (3a, 3b, 3c) jeweils am Rillengrund (5) des tieferen Rillenabschnittes (3b, 3c) bei einer Flanke (7) zum anschließenden seichteren Rillenabschnitt (3a, 3b) lokal eine nutartige, in Umfangsrichtung verlaufende Vertiefung (6) ausgebildet ist.

2. Fahrzeugluftreifen nach einem der Anspruch 1, **dadurch gekennzeichnet, dass** die nutartige Vertiefung (6) am Niveau des Rillengrundes (5) eine Breite (b₂) von 1,5 mm bis 2,5 mm aufweist.

3. Fahrzeugluftreifen nach Anspruch 1 oder 2, **dadurch gekennzeichnet, dass** die nutartige Vertiefung (6) gegenüber dem Niveau des Rillengrundes (5) in radialer Richtung eine Tiefe (T₆) von 0,3 mm bis 0,7 mm, vorzugsweise von 0,5 mm, aufweist.

4. Fahrzeugluftreifen nach einem der Ansprüche 1 bis 3, **dadurch gekennzeichnet, dass** die Flanke (7) zum anschließenden seichteren Rillenabschnitt (3a, 3b) auch die nutartige Vertiefung (6) begrenzt und vorzugsweise unter einem Winkel (γ) von 8° bis 12°, insbesondere von 10°, zur radialen Richtung verläuft.

5. Fahrzeugluftreifen nach einem der Ansprüche 1 bis 4, **dadurch gekennzeichnet, dass** die zweite, jede nutartige Vertiefung (6) begrenzende Flanke (7') unter einem Winkel (γ') von 35° bis 45°, insbesondere von in etwa 40°, verläuft.

6. Fahrzeugluftreifen nach einem der Ansprüche 1 bis 5, **dadurch gekennzeichnet, dass** die Tiefe (T₂) des seichtesten Rillenabschnittes (3a) 3,0 mm bis 4,0 mm, insbesondere 3,5 mm, beträgt.

7. Fahrzeugluftreifen nach einem der Ansprüche 1 bis 6, **dadurch gekennzeichnet, dass** die Differenz zwischen den unterschiedlichen Tiefen (T₂, T₃, T₄) 0,25 mm bis 1,25 mm beträgt.

8. Fahrzeugluftreifen nach einem der Ansprüche 1 bis 7, **dadurch gekennzeichnet, dass** die Querrille (3) drei Rillenabschnitte (3a, 3b, 3c) unterschiedlicher Tiefen (T₂, T₃, T₄) aufweist.

9. Fahrzeugluftreifen nach Anspruch 8, **dadurch gekennzeichnet, dass** die Differenz der Tiefen (T₃, T₄) des tiefsten Rillenabschnittes (3c) und des mittleren Rillenabschnittes (3b) 0,15 mm bis 0,35 mm, insbesondere 0,25 mm, beträgt.

10. Fahrzeugluftreifen nach Anspruch 8, **dadurch gekennzeichnet, dass** die Differenz der Tiefen (T₂, T₃) des mittleren Rillenabschnittes (3b) und des seichtesten Rillenabschnittes (3) 0,75 mm bis 1,25 mm, insbesondere 1,0 mm, beträgt.

11. Fahrzeugluftreifen nach einem der Ansprüche 1 bis 10, **dadurch gekennzeichnet, dass** die Rillenabschnitte (3a, 3b, 3c) in Erstreckungsrichtung der Querrille (3 gleich lang sind.

12. Fahrzeugluftreifen nach einem der Ansprüche 1 bis 11, **dadurch gekennzeichnet, dass** die Rillenabschnitte (3a, 3b, 3c) über zumindest 80% der Breite (b₁) der Profilblockreihe (1) verlaufen.

13. Fahrzeugluftreifen nach einem der Ansprüche 1 bis 12, **dadurch gekennzeichnet, dass** die Querrille (3) über einen Mündungsabschnitt (3d) in die Umfangsrille (2) einmündet, welcher eine größere Tiefe (T₅) aufweist als der tiefste Rillenabschnitt (3c).

14. Fahrzeugluftreifen nach einem der Ansprüche 1 bis 13, **dadurch gekennzeichnet, dass** der seichteste Rillenabschnitt (3a) der Querrille (3) an der Laufstreifenoberfläche eine geringere Breite (B₁) aufweist, als die Richtung Laufstreifenrand anschließenden Rillenabschnitte (3b, 3c).

## Claims

1. Pneumatic vehicle tyre of a radial type of construction comprising a tread with a shoulder-side row of profile blocks (1), which is bounded on the inner side of the tread by a circumferential groove (2), takes up up to 30% of the width (B) of the ground contact area of the tread and is provided with transverse grooves (3), which open out into the circumferential groove (2) and run at least substantially parallel to one another, each transverse groove (3) being bounded by a groove base (5) and two groove flanks (4, 4'), each transverse groove (3) having within the ground contact area at least two groove portions (3a, 3b, 3c) adjoining one another of different depths (T₂, T₃, T₄), the depth (T₂, T₃, T₄) of the groove portions (3a, 3b, 3c) increasing step by step in the direction of the periphery of the tread,
**characterized**
**in that**, in the case of groove portions (3a, 3b, 3c) adjoining one another, a groove-like, circumferentially running depression (6) is locally formed in each case on the groove base (5) of the deeper groove portion (3b, 3c) at a flank (7) to the adjoining, shallower groove portion (3a, 3b).

2. Pneumatic vehicle tyre according to Claim 1, **characterized in that** the groove-like depression (6) has at the level of the groove base (5) a width (b₂) of 1.5 mm to 2.5 mm.

3. Pneumatic vehicle tyre according to Claim 1 or 2, **characterized in that** the groove-like depression (6) has in the radial direction a depth (T₆) of 0.3 mm to 0.7 mm, preferably of 0.5 mm, with respect to the level of the groove base (5).

4. Pneumatic vehicle tyre according to one of Claims 1 to 3, **characterized in that** the flank (7) to the adjoining, shallower groove portion (3a, 3b) also bounds the groove-like depression (6) and preferably runs at an angle (γ) of 8° to 12°, in particular of 10°, in relation to the radial direction.

5. Pneumatic vehicle tyre according to one of Claims 1 to 4, **characterized in that** the second flank (7'), bounding each groove-like depression (6), runs at an angle (γ') of 35° to 45°, in particular of approximately 40°.

6. Pneumatic vehicle tyre according to one of Claims 1 to 5, **characterized in that** the depth (T₂) of the shallowest groove portion (3a) is 3.0 mm to 4.0 mm, in particular 3.5 mm.

7. Pneumatic vehicle tyre according to one of Claims 1 to 6, **characterized in that** the difference between the different depths (T₂, T₃, T₄) is 0.25 mm to 1.25 mm.

8. Pneumatic vehicle tyre according to one of Claims 1 to 7, **characterized in that** the transverse groove (3) has three groove portions (3a, 3b, 3c) of different depths (T₂, T₃, T₄).

9. Pneumatic vehicle tyre according to Claim 8, **characterized in that** the difference between the depths (T₃, T₄) of the deepest groove portion (3c) and the middle groove portion (3b) is 0.15 mm to 0.35 m, in particular 0.25 mm.

10. Pneumatic vehicle tyre according to Claim 8, **characterized in that** the difference between the depths (T₂, T₃) of the middle groove portion (3b) and the shallowest groove portion (3) is 0.75 mm to 1.25 mm, in particular 1.0 mm.

11. Pneumatic vehicle tyre according to one of Claims 1 to 10, **characterized in that** the groove portions (3a, 3b, 3c) are of the same length in the direction of extent of the transverse groove (3).

12. Pneumatic vehicle tyre according to one of Claims 1 to 11, **characterized in that** the groove portions (3a, 3b, 3c) run over at least 80% of the width (b₁) of the row of profile blocks (1).

13. Pneumatic vehicle tyre according to one of Claims 1 to 12, **characterized in that** the groove portions (3) open out into the circumferential groove (2) by way of a mouth portion (3d), which has a greater depth (T₅) than the deepest groove portion (3c).

14. Pneumatic vehicle tyre according to one of Claims 1 to 13, **characterized in that** the shallowest groove portion (3a) of the transverse groove (3) has a smaller width (B₁) at the surface of the tread than the groove portions (3b, 3c) adjoining in the direction of the periphery of the tread.

## Revendications

1. Pneumatique de véhicule du type radial avec une bande de roulement présentant une rangée de blocs profilés (1) du côté de l'épaulement limitée sur le côté intérieur de la bande de roulement par une rainure périphérique (2), qui occupe jusqu'à 30 % de la largeur (B) de la face de contact au sol de la bande de roulement et qui est dotée de rainures transversales (3) débouchant dans la rainure périphérique (2) et s'étendant au moins essentiellement parallèlement les unes aux autres, dans lequel chaque rainure transversale (3) est limitée par un fond de rainure (5) et deux flancs de rainure (4, 4'), dans lequel chaque rainure transversale (3) présente à l'intérieur de la face de contact au sol au moins deux parties de rainure (3a, 3b, 3c) de profondeurs différentes (T₂, T₃, T₄) se raccordant l'une à l'autre, dans lequel la profondeur (T₂, T₃, T₄) des parties de rainure (3a, 3b, 3c) augmente de façon échelonnée en direction du bord de la bande de roulement, **caractérisé en ce que**, avec des parties de rainure (3a, 3b, 3c) se raccordant l'une à l'autre un creux (6) en forme de rainure, s'étendant en direction périphérique est formé localement chaque fois dans le fond de rainure (5) de la partie de rainure plus profonde (3b, 3c) près d'un flanc (7) vers la partie de rainure moins profonde qui suit (3a, 3b).

2. Pneumatique de véhicule selon la revendication 1, **caractérisé en ce que** le creux en forme de rainure (6) présente au niveau du fond de rainure (5) une largeur (b₂) de 1,5 mm à 2,5 mm.

3. Pneumatique de véhicule selon la revendication 1 ou 2, **caractérisé en ce que** le creux en forme de rainure (6) présente, par rapport au niveau du fond de rainure (5) en direction radiale une profondeur (T₆) de 0,3 mm à 0,7 mm, de préférence de 0,5 mm.

4. Pneumatique de véhicule selon l'une quelconque des revendications 1 à 3, **caractérisé en ce que** le flanc (7) de la partie de rainure moins profonde qui suit (3a, 3b) limite également le creux en forme de rainure (6) et s'étend de préférence sous un angle (γ) de 8° à 12°, en particulier de 10°, par rapport à la direction radiale.

5. Pneumatique de véhicule selon l'une quelconque des revendications 1 à 4, **caractérisé en ce que** le deuxième flanc (7') limitant chaque creux en forme de rainure (6) s'étend sous un angle (γ') de 35° à 45°, de préférence d'environ 40°.

6. Pneumatique de véhicule selon l'une quelconque des revendications 1 à 5, **caractérisé en ce que** la profondeur (T₂) de la partie de rainure la moins profonde (3a) vaut 3,0 mm à 4,0 mm, en particulier 3,5 mm.

7. Pneumatique de véhicule selon l'une quelconque des revendications 1 à 6, **caractérisé en ce que** la différence entre les différentes profondeurs (T₂, T₃, T₄) vaut 0,25 mm à 1,25 mm.

8. Pneumatique de véhicule selon l'une quelconque des revendications 1 à 7, **caractérisé en ce que** la rainure transversale (3) présente trois parties de rainure (3a, 3b, 3c) de profondeurs différentes (T₂, T₃, T₄).

9. Pneumatique de véhicule selon la revendication 8, **caractérisé en ce que** la différence des profondeurs (T₃, T₄) de la partie de rainure la plus profonde (3c) et la partie de rainure moyenne (3b) vaut 0,15 mm à 0,35 mm, en particulier 0,25 mm.

10. Pneumatique de véhicule selon la revendication 8, **caractérisé en ce que** la différence des profondeurs (T₂, T₃) de la partie de rainure moyenne (3b) et de la partie de rainure la moins profonde (3) vaut 0,75 mm à 1,25 mm, en particulier 1,0 mm.

11. Pneumatique de véhicule selon l'une quelconque des revendications 1 à 10, **caractérisé en ce que** les parties de rainure (3a, 3b, 3c) sont de même longueur dans la direction d'extension de la rainure transversale (3).

12. Pneumatique de véhicule selon l'une quelconque des revendications 1 à 11, **caractérisé en ce que** les parties de rainure (3a, 3b, 3c) s'étendent sur au moins 80 % de la largeur (b₁) de la rangée de blocs profilés (1).

13. Pneumatique de véhicule selon l'une quelconque des revendications 1 à 12, **caractérisé en ce que** la rainure transversale (3) débouche dans la rainure périphérique (2) par une partie d'embouchure (3d), qui présente une plus grande profondeur (T₅) que la partie de rainure la plus profonde (3c).

14. Pneumatique de véhicule selon l'une quelconque des revendications 1 à 13, **caractérisé en ce que** la partie de rainure la moins profonde (3a) de la rainure transversale (3) présente à la surface de la bande de roulement une largeur (B₁) plus faible que les parties de rainure (3b, 3c) se raccordant en direction du bord de la bande de roulement.
